(19) Europäisches Patentamt / European Patent Office / Office européen des brevets

(11) EP 4 723 234 A1

(12) **EUROPEAN PATENT APPLICATION**
published in accordance with Art. 153(4) EPC

(43) Date of publication:
08.04.2026 Bulletin 2026/15

(21) Application number: 24937487.7

(22) Date of filing: 29.05.2024

(51) International Patent Classification (IPC):
$H01M\ 4/525^{(2010.01)}$    $H01M\ 4/505^{(2010.01)}$
$H01M\ 4/485^{(2010.01)}$    $H01M\ 4/36^{(2006.01)}$
$H01M\ 4/131^{(2010.01)}$    $H01M\ 10/0525^{(2010.01)}$

(52) Cooperative Patent Classification (CPC):
Y02E 60/10

(86) International application number:
PCT/CN2024/096116

(87) International publication number:
WO 2025/227448 (06.11.2025 Gazette 2025/45)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.04.2024 CN 202410544723

(71) Applicant: **Beijing Easpring Material Technology
Co., Ltd.
Beijing 100160 (CN)**

(72) Inventors:
• **LIU, Yun
Beijing 100160 (CN)**

• **WANG, Cong
Beijing 100160 (CN)**
• **WANG, Jingpeng
Beijing 100160 (CN)**
• **ZHOU, Penghu
Beijing 100160 (CN)**
• **ZHANG, Xuequan
Beijing 100160 (CN)**
• **LIU, Yafei
Beijing 100160 (CN)**
• **CHEN, Yanbin
Beijing 100160 (CN)**

(74) Representative: **Nederlandsch Octrooibureau
P.O. Box 29720
2502 LS The Hague (NL)**

(54) **POSITIVE ELECTRODE ACTIVE MATERIAL AND PREPARATION METHOD THEREFOR, POSITIVE ELECTRODE SHEET, BATTERY AND ELECTRIC DEVICE**

(57) A positive electrode active material and a preparation method therefor, a positive electrode sheet, a battery and an electric device. The positive electrode active material is a secondary particle, and the equivalent layer number $R_{(003)}$ of the (003) crystal plane of the positive electrode active material and the equivalent layer number $R_{(104)}$ of the (104) crystal plane satisfy: $R_{(104)}/R_{(003)}$ is 1.4-1.8, (I), wherein $A_{(003)}$ is the average thickness of a microcrystal of the positive electrode active material in a direction perpendicular to the direction of the (003) crystal plane, with the unit thereof being nm; $B_{(003)}$ is the spacing of the (003) crystal plane in the microcrystal of the positive electrode active material, with the unit thereof being nm; $A_{(104)}$ is the average thickness of the microcrystal of the positive electrode active material in a direction perpendicular to the direction of the (104) crystal plane, with the unit thereof being nm; and $B_{(104)}$ is the spacing of the (104) crystal plane in the microcrystal of the positive electrode active material, with the unit thereof being nm.

$$R_{(003)} = \frac{A_{(003)}}{B_{(003)}}, \qquad R_{(104)} = \frac{A_{(104)}}{B_{(104)}}$$

Formula (I)

**Description**

**PRIORITY INFORMATION**

This application claims priority to Chinese Patent Application No. 202410544723.1, titled "CATHODE ACTIVE MATERIAL AND METHOD FOR PREPARING SAME, CATHODE PLATE, BATTERY, AND ELECTRIC DEVICE", and filed with China National Intellectual Property Administration on April 30, 2024, the entire contents of which are incorporated herein by reference.

**FIELD**

The present disclosure belongs to the field of batteries, and more particularly, to a cathode active material and a method for preparing same, a cathode plate, a battery, and an electric device.

**BACKGROUND**

Lithium-ion batteries are widely used in various consumer electronic products and electric vehicles due to their outstanding characteristics such as light weight, no pollution, and no memory effect. During charging and discharging cycles, as lithium ions intercalates from and deintercalates into a cathode active material, the cathode active material undergoes contraction and expansion, in such a manner that cracks are likely to be generated in the cathode active material, which reduces structural stability of the material, resulting in low battery cycling performance.

**SUMMARY**

The present disclosure aims to solve at least one of the technical problems in the related art to some extent. To this end, an objective of the present disclosure is to provide a cathode active material and a method for preparing same, a cathode plate, a battery, and an electric device. Using the cathode active material can enable a battery containing the cathode active material to have excellent cycling performance.

In a first aspect of the present disclosure, a cathode active material is provided. According to an embodiment of the present disclosure, the cathode active material is secondary particles. An equivalent number $R_{(003)}$ of (003) crystallographic planes of the cathode active material and an equivalent number $R_{(104)}$ of (104) crystallographic planes of the cathode active material satisfy that $R_{(104)}/R_{(003)}$ ranges from 1.4 to 1.8, $R_{(003)} = \dfrac{A_{(003)}}{B_{(003)}}$, and $R_{(104)} = \dfrac{A_{(104)}}{B_{(104)}}$,

where $A_{(003)}$ represents an average thickness of crystallites in the cathode active material in a direction perpendicular to the (003) crystallographic planes, in the unit of nm, $B_{(003)}$ represents an interplanar spacing of the (003) crystallographic planes in the crystallites of the cathode active material, in the unit of nm, $A_{(104)}$ represents an average thickness of the crystallites in the cathode active material in a direction perpendicular to the (104) crystallographic planes, in the unit of nm, and $B_{(104)}$ represents an interplanar spacing of the (104) crystallographic planes in the crystallites of the cathode active material, in the unit of nm.

With the cathode active material according to the embodiments of the present disclosure, the equivalent number $R_{(003)}$ of the (003) crystallographic planes of the cathode active material and the equivalent number $R_{(104)}$ of the (104) crystallographic planes of the cathode active material satisfy that $R_{(104)}/R_{(003)}$ ranges from 1.4 to 1.8, which can induce primary particles in the cathode active material to be arranged in a divergent manner, and to have well-ordered grain boundaries and a low crystallographic planes density. In a charge-discharge process, the primary particles contract and expand in a c-axis direction and align with grain boundary patterns, which can not only effectively release an expansion stress generated in the charge-discharge process, but also prevent generation of microcracks at interfaces, significantly improving stability of the cathode active material. As a result, using the cathode active material of the present disclosure can enable a battery containing the cathode active material to have excellent cycling performance.

In addition, the cathode active material according to the above embodiments of the present disclosure can further have the following additional technical features.

In some embodiments of the present disclosure, $R_{(104)}/R_{(003)}$ ranges from 1.55 to 1.75. Thus, the cycling performance of the battery can be further enhanced.

In some embodiments of the present disclosure, the equivalent number $R_{(003)}$ of the (003) crystallographic planes of the cathode active material ranges from 80 to 130.

In some embodiments of the present disclosure, the equivalent number $R_{(003)}$ of the (003) crystallographic planes of the cathode active material ranges from 90 to 120.

In some embodiments of the present disclosure, the equivalent number $R_{(104)}$ of the (104) crystallographic planes of the cathode active material ranges from 140 to 210.

In some embodiments of the present disclosure, the equivalent number $R_{(104)}$ of the (104) crystallographic planes of the cathode active material ranges from 150 to 200.

In some embodiments of the present disclosure, $A_{(003)} = \dfrac{K\lambda}{\beta 1 \cos\theta 1}$, where K represents a Scherrer constant 0.89, λ represents a wavelength of a test X-ray, β1 represents a full width at half maximum of a diffraction peak of the (003) crystallographic planes in the crystallites in the cathode active material, and θ1 represents a Bragg diffraction angle of the (003) crystallographic planes in the crystallites in the cathode active material.

In some embodiments of the present disclosure, $B_{(003)} = \dfrac{\lambda}{2\sin\theta 1}$.

In some embodiments of the present disclosure, the average thickness $A_{(003)}$ of the crystallites in the cathode active material in the direction perpendicular to the (003) crystallographic planes ranges from 35 nm to 55 nm.

In some embodiments of the present disclosure, the average thickness $A_{(003)}$ of the crystallites in the cathode active material in the direction perpendicular to the (003) crystallographic planes ranges from 40 nm to 55 nm.

In some embodiments of the present disclosure, the interplanar spacing $B_{(003)}$ of the (003) crystallographic planes of the cathode active material ranges from 0.4730 nm to 0.4760 nm.

In some embodiments of the present disclosure, the interplanar spacing $B_{(003)}$ of the (003) crystallographic planes of the cathode active material ranges from 0.4735 nm to 0.4750 nm.

In some embodiments of the present disclosure, $A_{(104)} = \dfrac{K\lambda}{\beta 2 \cos\theta 2}$, where K represents a Scherrer constant 0.89, λ represents a wavelength of a test X-ray, β2 represents a full width at half maximum of a diffraction peak of the (104) crystallographic planes in the crystallites in the cathode active material, and θ2 represents a Bragg diffraction angle of the (104) crystallographic planes in the crystallites in the cathode active material.

In some embodiments of the present disclosure, $B_{(104)} = \dfrac{\lambda}{2\sin\theta 2}$.

In some embodiments of the present disclosure, the average thickness $A_{(104)}$ of the crystallites in the cathode active material in the direction perpendicular to the (104) crystallographic planes ranges from 25 nm to 55 nm.

In some embodiments of the present disclosure, the average thickness $A_{(104)}$ of the crystallites in the cathode active material in the direction perpendicular to the (104) crystallographic planes ranges from 30 nm to 50 nm.

In some embodiments of the present disclosure, the interplanar spacing $B_{(104)}$ of the (104) crystallographic planes of the cathode active material ranges from 0.2030 nm to 0.2040 nm.

In some embodiments of the present disclosure, the interplanar spacing $B_{(104)}$ of the (104) crystallographic planes of the cathode active material ranges from 0.2035 nm to 0.2040 nm.

In some embodiments of the present disclosure, primary particles of the cathode active material have an aspect ratio ranging from (2 to 5):1. Thus, the cycling performance of the battery can be further enhanced.

In some embodiments of the present disclosure, primary particles of the cathode active material have an aspect ratio ranging from (2 to 4):1. Thus, the cycling performance of the battery can be further enhanced.

In some embodiments of the present disclosure, the cathode active material has a cross-sectional porosity ranging from 2% to 10%. Thus, the cycling performance of the battery can be further enhanced.

In some embodiments of the present disclosure, the cathode active material has a cross-sectional porosity ranging from 3% to 8%. Thus, the cycling performance of the battery can be further enhanced.

In some embodiments of the present disclosure, the cathode active material has a BET specific surface area ranging from 0.4 m²/g to 0.9 m²/g. Thus, the cycling performance of the battery can be further enhanced.

In some embodiments of the present disclosure, the cathode active material has a BET specific surface area ranging from 0.5 m²/g to 0.8 m²/g. Thus, the cycling performance of the battery can be further enhanced.

In some embodiments of the present disclosure, the cathode active material includes a matrix. The matrix includes $Li_{1+a}Ni_xCo_yMn_zM_mO_2$, where $-0.05 \leq a \leq 0.3$, $0.8 \leq x \leq 1$, $0 \leq y \leq 0.2$, $0 \leq z \leq 0.2$, $0.002 \leq m \leq 0.01$, and M includes at least one of Sn, W, V, Mo, P, or B. Thus, the cycling performance of the battery can be further enhanced.

In some embodiments of the present disclosure, the M further includes at least one of Sb, Nb, Mg, La, Ti, Al, Sr, Ba, Y, Zr, Ca, Fe, S, Zn, or Ta.

In some embodiments of the present disclosure, the cathode active material further includes a coating layer formed on at least part of a surface of the matrix. The coating layer contains element J, the element J including at least one of Al, Zr, Ti, F, B, Cl, Br, I, S, W, Co, Sn, or Mo. Thus, the cycling performance of the battery can be further enhanced.

In a second aspect of the present disclosure, a method for preparing the above cathode active material is provided. The method includes: preparing a cathode active material precursor; and performing first mixing sintering on the cathode active material precursor, a lithium source, and a dopant containing the element M, to obtain a first sintered cathode active material.

Thus, with the method, the above cathode active material can be prepared, enable the battery containing the cathode active material to have excellent cycling performance.

In some embodiments of the present disclosure, said preparing a cathode active material precursor comprises: mixing a nickel salt, a cobalt salt, a manganese salt, a precipitant, and a complexing agent for a co-precipitation reaction, to obtain the cathode active material precursor. A temperature of the co-precipitation reaction ranges from 50°C to 80°C. An ammonia content during the co-precipitation reaction ranges from 2 g/L to 8 g/L.

In some embodiments of the present disclosure, the temperature of the co-precipitation reaction ranges from 55°C to 75°C; and the ammonia content during the co-precipitation reaction ranges from 3 g/L to 7 g/L.

In some embodiments of the present disclosure, the cathode active material precursor satisfies at least one of the following conditions: the cathode active material precursor has Dv50 ranging from 9 $\mu$m to 20 $\mu$m; an equivalent number $R_{(101)}$ of (101) crystallographic planes of the cathode active material precursor and an equivalent number $R_{(001)}$ of (001) crystallographic planes of the cathode active material precursor satisfy that $R_{(101)}/R_{(001)}$ ranges from 2.0 to 3.0; or a peak intensity ratio $I_{(101)}/I_{(001)}$ of the cathode active material precursor ranges from 0.7 to 1.4.

Thus, the cycling performance of the battery can be further enhanced.

In some embodiments of the present disclosure, the peak intensity ratio $I_{(101)}/I_{(001)}$ of the cathode active material precursor ranges from 0.8 to 1.2.

In some embodiments of the present disclosure, the first mixing sintering is performed at a temperature ranging from 650°C to 900°C for a duration ranging from 4 hours to 15 hours.

In some embodiments of the present disclosure, the method further includes: performing second mixing sintering on the first sintered cathode active material and a coating agent containing element J, to form a coating layer containing the element J on at least part of a surface of the first sintered cathode active material. Thus, the cycling performance of the battery can be further enhanced.

In some embodiments of the present disclosure, the second mixing sintering is performed at a temperature ranging from 200°C to 700°C for a duration ranging from 3 hours to 10 hours.

In a third aspect of the present disclosure, a cathode plate is provided. The cathode plate includes the cathode active material described in the first aspect of the present disclosure or the cathode active material obtained by the method described in the second aspect of the present disclosure. Thus, the battery containing the cathode active material has excellent cycling performance.

In a fourth aspect of the present disclosure, a battery is provided. The battery includes the cathode plate described in the third aspect of the present disclosure. Thus, the battery has excellent cycling performance.

In a fifth aspect of the present disclosure, an electric device is provided. The electric device includes the battery described in the fourth aspect of the present disclosure.

Additional aspects and advantages of the present disclosure will be provided at least in part in the following description, or will become apparent at least in part from the following description, or can be learned from practicing of the present disclosure.

**DETAILED DESCRIPTION**

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

The endpoint values or any values of the ranges disclosed in the present disclosure are not limited to the precise ranges or values. These ranges or values should be understood to include values close to these ranges or values. For numerical ranges, one or more new numerical ranges can be obtained by combining the endpoint values of the respective ranges, an endpoint value and an individual point value within the respective ranges, and individual point values within the respective ranges, and these numerical ranges should be regarded as specifically disclosed in the present disclosure.

In an aspect of the present disclosure, the present disclosure provides a cathode active material. According to an embodiment of the present disclosure, the cathode active material is secondary particles. An equivalent number $R_{(003)}$ of (003) crystallographic planes of the cathode active material and an equivalent number $R_{(104)}$ of (104) crystallographic planes of the cathode active material satisfy that $R_{(104)}/R_{(003)}$ ranges from 1.4 to 1.8, $R_{(003)} = \dfrac{A_{(003)}}{B_{(003)}}$, and

$R_{(104)} = \dfrac{A_{(104)}}{B_{(104)}}$, where $A_{(003)}$ represents an average thickness of crystallites in the cathode active material in a direction perpendicular to the (003) crystallographic planes, in the unit of nm, $B_{(003)}$ represents an interplanar spacing of the (003) crystallographic planes in the crystallites of the cathode active material, in the unit of nm, $A_{(104)}$ represents an

average thickness of the crystallites in the cathode active material in a direction perpendicular to the (104) crystallographic planes, in the unit of nm, and $B_{(104)}$ represents an interplanar spacing of the (104) crystallographic planes in the crystallites of the cathode active material, in the unit of nm.

It was found that an equivalent number of a crystallographic planes of a layered cathode active material represents a framework size of an R-3m structure. For the layered cathode active material, a statistical number of stacking layers in a predetermined direction can reflect an average number of lattice sites in the predetermined direction. For the layered cathode active material, the equivalent number of the crystallographic planes in each direction can truly reflect a number of active lithium sites that a single crystallite can accommodate, which affects capacity, lithium-ion transport channels, and overall structural stability. In a charge-discharge process, the layered cathode active material typically undergoes significant contraction and expansion along a c-axis and an a-axis in units of layers. Overall contraction and expansion of the crystallite size is a sum of degrees of structural changes within individual layers. Therefore, a number of crystallographic planess is crucial to an expansion stress caused by changes in the layered lattice within the crystallite, and has a decisive influence on structural stability of the material. $R_{(104)}/R_{(003)}$ of the material can represent a ratio of a number of layers in the a-axis direction to that in the c-axis direction. The c-axis is arranged parallel to a direction from a center of the secondary particles to a surface of the secondary particles. The a-axis extends in the direction from the center of the secondary particles to the surface of the secondary particles. Further, it was found that, enabling the equivalent number $R_{(003)}$ of the (003) crystallographic planes of the cathode active material and the equivalent number $R_{(104)}$ of the (104) crystallographic planes of the cathode active material to satisfy that $R_{(104)}/R_{(003)}$ ranges from 1.4 to 1.8 can facilitate a divergent arrangement of primary particles in the cathode active material, and result in regular grain boundaries and a low crystallographic planes density. In the charge-discharge process, the primary particles contract and expand in the c-axis direction and align with grain boundary patterns, which can not only effectively release an expansion stress generated in the charge-discharge process, but also prevent generation of microcracks at interfaces, significantly improving stability of the cathode active material. As a result, using the cathode active material of the present disclosure can enable a battery containing the cathode active material to have excellent cycling performance.

According to an embodiment of the present disclosure, the equivalent number $R_{(003)}$ of the (003) crystallographic planes of the cathode active material and the equivalent number $R_{(104)}$ of the (104) crystallographic planes of the cathode active material satisfy that $R_{(104)}/R_{(003)}$ ranges from 1.4 to 1.8, e.g., 1.4, 1.45, 1.5, 1.55, 1.6, 1.65, 1.7, 1.75, 1.8, etc. According to a specific embodiment of the present disclosure, $R_{(104)}/R_{(003)}$ ranges from 1.55 to 1.75. Thus, stability of the cathode active material can be further improved, enhancing the cycling performance of the battery.

According to an embodiment of the present disclosure, the equivalent number $R_{(003)}$ of the (003) crystallographic planes of the cathode active material ranges from 80 to 130, e.g., 80, 90, 100, 110, 120, 130, etc. Further, the equivalent number $R_{(003)}$ of the (003) crystallographic planes of the cathode active material ranges from 90 to 120. The equivalent number $R_{(104)}$ of the (104) crystallographic planes of the cathode active material ranges from 140 to 210, e.g., 140, 150, 160, 170, 180, 190, 200, 210, etc. Further, the equivalent number $R_{(104)}$ of the (104) crystallographic planes of the cathode active material ranges from 150 to 200.

It was found that, when the equivalent number of the (003) crystallographic planes of the cathode active material falls within the above range, on one hand, an overall layered framework is ensured to have a sufficient number of lithium sites to provide a space for accommodating active lithium, achieving a maximum reversible specific capacity. On the other hand, a stabilizing effect is exerted on the expansion and the contraction of the c-axis in the charge-discharge process, which can alleviate structural distortion and collapse of the material, endowing the material with excellent cycling stability. The equivalent number of the (104) crystallographic planes of the cathode active material can indirectly reflect a number of stacking layers in the a-axis direction, which represents a size of flat layers, and determines a number of sites capable of accommodating lithium ions within each flat layer and a length of a solid-phase migration path for lithium ions during intercalation and deintercalation within the layer. When the equivalent number of the (104) crystallographic planes of the cathode active material falls within the above range, the material can be endowed with a maximum reversible capacity and high-rate capability. Therefore, by controlling the $R_{(003)}$ and the $R_{(104)}$ of the cathode active material within the above ranges in the present disclosure, an energy density, cycling performance, rate capability, and safety performance of the battery can be further improved.

Specifically, by performing calculations on an XRD test result of the cathode active material using the Scherrer equation and Bragg's law, an average thickness $A_{hkl}$ of the crystallites along a predetermined crystallographic planes and an interplanar spacing $B_{hkl}$ along the predetermined crystallographic planes of the material can be obtained respectively. The equivalent number of crystallites, in the material, along specific crystallographic planes can be calculated using

$R_{hkl} = A_{hkl}/B_{hkl}$. For example, $R_{(003)} = \dfrac{A_{(003)}}{B_{(003)}}$, and $R_{(104)} = \dfrac{A_{(104)}}{B_{(104)}}$

As an example, $A_{(003)} = \dfrac{K\lambda}{\beta_1 \cos\theta_1}$, where K represents a Scherrer constant 0.89, $\lambda$ represents a

wavelength of a test X-ray, $\beta 1$ represents a full width at half maximum of a diffraction peak of the (003) crystallographic planes in the crystallites in the cathode active material, and $\theta 1$ represents a Bragg diffraction angle of the (003) crystallographic planes in the crystallites in the cathode active material.

$$B_{(003)} = \frac{\lambda}{2SiR\theta 1}, \quad A_{(104)} = \frac{K\lambda}{\beta 2\cos\theta 2}$$, where K represents the Scherrer constant 0.89, $\lambda$ represents a wavelength of a test X-ray, $\beta 2$ represents a full width at half maximum of a diffraction peak of the (104) crystallographic planes in the crystallites in the cathode active material, and $\theta 2$ represents a Bragg diffraction angle of the (104) crystallographic planes in the crystallites in the cathode active material. $$B_{(104)} = \frac{\lambda}{2SiR\theta 2}$$. Specifically, an XRD characteristic diffraction peak corresponding to the (003) crystallographic planes has 201 ranging from 18.5° to 19.5°, and the (104) crystallographic planes has 202 ranging from 44.0° to 44.5°.

According to an embodiment of the present disclosure, the average thickness $A_{(003)}$ of the crystallites in the cathode active material in the direction perpendicular to the (003) crystallographic planes ranges from 35 nm to 55 nm, e.g., 35 nm, 40 nm, 45 nm, 50 nm, 55 nm, etc. Further, the average thickness $A_{(003)}$ of the crystallites in the cathode active material in the direction perpendicular to the (003) crystallographic planes ranges from 40 nm to 55 nm. Thus, with the average thickness $A_{(003)}$ of the crystallites in the cathode active material in the direction perpendicular to the (003) crystallographic planes falling within the above range, the material has a suitable crystallite size in the c-axis direction, which can not only ensure a normal reversible capacity release, but also provide a predetermined stabilizing effect when expansion and contraction occur along the c-axis, endowing the material with optimal comprehensive performance in both capacity and cycling.

According to an embodiment of the present disclosure, the interplanar spacing $B_{(003)}$ of the (003) crystallographic planes of the cathode active material ranges from 0.4730 nm to 0.4760 nm, e.g., 0.4730 nm, 0.4735 nm, 0.4740 nm, 0.4745 nm, 0.4750 nm, 0.4755 nm, 0.4760 nm, etc. Further, the interplanar spacing $B_{(003)}$ of the (003) crystallographic planes of the cathode active material ranges from 0.4735 nm to 0.4750 nm. Thus, when the interplanar spacing $B_{(003)}$ of the (003) crystallographic planes of the cathode active material falls within the above range, on one hand, rapid intercalation and deintercalation of lithium ions are facilitated, improving the rate capability of the material. On the other hand, a predetermined space can be provided for contraction and expansion of unit cells in the c-axis direction to reduce lattice distortion and crystallite micro-stress, improving stability of the material.

According to an embodiment of the present disclosure, the average thickness $A_{(104)}$ of the crystallites in the cathode active material in the direction perpendicular to the (104) crystallographic planes ranges from 25 nm to 55 nm, e.g., 25 nm, 30 nm, 35 nm, 40 nm, 45 nm, 50 nm, 55 nm, etc. Further, the average thickness $A_{(104)}$ of the crystallites in the cathode active material in the direction perpendicular to the (104) crystallographic planes ranges from 30 nm to 50 nm. Thus, when the average thickness $A_{(104)}$ of the crystallites in the cathode active material in the direction perpendicular to the (104) crystallographic planes falls within the above range, the material has a suitable crystallite size in the a-axis direction and possesses a suitably sized active structure and a suitably sized lithium-ion migration path, ensuring a high capacity and satisfactory rate capability of the material.

According to an embodiment of the present disclosure, the interplanar spacing $B_{(104)}$ of the (104) crystallographic planes of the cathode active material ranges from 0.2030 nm to 0.2040 nm, e.g., 0.2030 nm, 0.2032 nm, 0.2035 nm, 0.2037 nm, 0.2039 nm, 0.2040 nm, etc. Further, the interplanar spacing $B_{(104)}$ of the (104) crystallographic planes of the cathode active material ranges from 0.2035 nm to 0.2040 nm. Thus, when the interplanar spacing $B_{(104)}$ of the (104) crystallographic planes of the cathode active material falls within the above range, the rapid intercalation and deintercalation of the lithium ions are facilitated, and contraction of the unit cells in the a-axis direction is alleviated, improving the rate capability and the cycling stability of the material.

According to an embodiment of the present disclosure, primary particles of the cathode active material have an aspect ratio ranging from 2 to 5:1, e.g., 2:1, 2.5:1, 3:1, 3.5:1, 4:1, 4.5:1, 5:1, etc. Further, the primary particles of the cathode active material have an aspect ratio ranging from 2 to 4:1.

According to an embodiment of the present disclosure, the cathode active material has a cross-sectional porosity ranging from 2% to 10%, e.g., 2%, 5%, 7%, 9%, 10%, etc. Further, the cathode active material has the cross-sectional porosity ranging from 3% to 8%.

According to an embodiment of the present disclosure, the cathode active material has a BET specific surface area ranging from 0.4 m$^2$/g to 0.9 m$^2$/g, e.g., 0.4 m$^2$/g, 0.5 m$^2$/g, 0.6 m$^2$/g, 0.7 m$^2$/g, 0.8 m$^2$/g, 0.9 m$^2$/g, etc. Further, the cathode active material has the BET specific surface area ranging from 0.5 m$^2$/g to 0.8 m$^2$/g.

Under the above aspect ratio of the primary particles, the primary particles exhibit a more elongated morphology, the a-axis is highly consistent with a direction radiating from a center of the secondary particles, many pores are formed between the primary particles, and the material has a large specific surface area. The above morphological structure of the secondary particles not only alleviates particle expansion to minimize crack generation, but also prevents side reactions of an electrolyte within the secondary particles, improving the stability of the cathode active material.

In the present disclosure, a method for measuring the aspect ratio of the primary particles of the cathode active material includes: obtaining a surface electron microscope image under an SEM, identifying major axes of primary particles within a secondary particle sphere using software, and calculating an average primary particle aspect ratio.

In the present disclosure, a method for measuring the cross-sectional porosity of the cathode active material includes: performing a cross-sectional processing on the cathode active material, and obtaining a cross-sectional electron microscope image under the SEM. An image contrast is identified using software to obtain a pore area and a total area. A proportion of the pore area to the total area is defined as the cross-sectional porosity.

In the present disclosure, the BET specific surface area of the cathode active material can be measured using instruments and methods known in the art. For example, the BET specific surface area of the cathode active material may be measured with reference to the following method: using an American Micromeritics multi-station fully automatic specific surface area and porosity analyzer GeminiVII 2390, placing approximately 7 g of sample into a 9 cc long tube with a bulb, degassing the sample at 200°C for 2 hours, and placing the degassed sample into a main instrument to obtain BET specific surface area data of the cathode active material.

According to an embodiment of the present disclosure, the cathode active material includes a matrix. The matrix includes $Li_{1+a}Ni_xCo_yMn_zM_mO_2$, where $-0.05 \leq a \leq 0.3$, $0.8 \leq x \leq 1$, $0 \leq y \leq 0.2$, $0 \leq z \leq 0.2$, $0.002 \leq m \leq 0.01$, and M includes at least one of Sn, W, V, Mo, P, or B. Thus, by doping the above element M into the cathode active material, the equivalent number of the crystallographic planes of the cathode active material can be controlled, enhancing the cycling performance of the battery.

According to some embodiments of the present disclosure, in the $Li_{1+a}Ni_xCo_yMn_zM_mO_2$, a satisfies that $-0.05 \leq a \leq 0.3$. For example, a may be -0.05, -0.02, 0, 0.02, 0.05, 0.1, 0.2, 0.3, etc. Thus, with lithium ions at this content in the matrix, a specific capacity of the cathode active material can be increased, enabling the battery to have a high energy density.

According to some embodiments of the present disclosure, in the $Li_{1+a}Ni_xCo_yMn_zM_mO_2$, x, y, z, and m satisfy that $0.8 \leq x \leq 1$, $0 \leq y \leq 0.2$, $0 \leq z \leq 0.2$, and $0.002 \leq m \leq 0.01$. For example, x may be 0.8, 0.85, 0.9, 0.95, 1, etc.; y may be 0, 0.1, 0.15, 0.2, etc.; z may be 0, 0.1, 0.15, 0.2, etc.; m may be 0.002, 0.005, 0.007, 0.01, etc.

According to some embodiments of the present disclosure, in the $Li_{1+a}Ni_xCo_yMn_zM_mO_2$, the M may further include at least one of Sb, Nb, Mg, La, Ti, Al, Sr, Ba, Y, Zr, Ca, Fe, S, Zn, or Ta. Thus, the stability of the cathode active material can be further improved, enhancing the cycling performance of the battery.

According to an embodiment of the present disclosure, the cathode active material further includes a coating layer formed on at least part of a surface of the matrix. The coating layer contains element J. The element J includes at least one of Al, Zr, Ti, F, B, Cl, Br, I, S, W, Co, Sn, or Mo. Thus, by forming the coating layer containing the element J on an outer surface of the matrix, side reactions between a core of the cathode active material and the electrolyte can be reduced, improving the cycling stability of the cathode active material.

It should be noted that a form in which the element J exists in the above coating layer may include an oxide and/or a lithium oxide, which can be selected by those skilled in the art as desired and will not be described in detail here.

In a second aspect of the present disclosure, the present disclosure provides a method for preparing the above cathode active material. According to an embodiment of the present disclosure, the method includes the following steps.

In S100, a cathode active material precursor is provided.

According to an embodiment of the present disclosure, the cathode active material precursor may be a commercially available product or prepared through the following steps.

Specifically, a nickel salt solution, a cobalt salt solution, and a manganese salt solution are mixed based on a molar ratio of element nickel, element cobalt, and element manganese of x:y:z. Then, a precipitant (for example, a sodium hydroxide solution) and a complexing agent (for example, aqueous ammonia) are added. The mixture undergoes a co-precipitation reaction to obtain the cathode active material precursor. The co-precipitation reaction is performed at a temperature ranging from 50°C to 80°C, e.g., 50°C, 55°C, 60°C, 65°C, 70°C, 75°C, 80°C, etc. Further, the co-precipitation reaction is performed at a temperature ranging from 55°C to 75°C. An ammonia content during the co-precipitation reaction ranges from 2 g/L to 8 g/L, e.g., 1 g/L, 2 g/L, 3 g/L, 4 g/L, 5 g/L, 6 g/L, 7 g/L, and 8 g/L. Further, the ammonia content ranges from 3 g/L to 7 g/L.

It should be noted that the "ammonia content during the co-precipitation reaction" may be understood as a content of the aqueous ammonia in the reaction system when the aqueous ammonia is used as the complexing agent for the co-precipitation reaction.

Thus, by controlling the above temperature for the co-precipitation and the above ammonia content, a cathode active material precursor with a specific equivalent number of the crystallographic planes can be synthesized.

According to an embodiment of the present disclosure, the cathode active material precursor has Dv50 ranging from 9 μm to 20 μm, e.g., 9 μm, 10 μm, 12 μm, 15 μm, 18 μm, 20 μm, etc.

In the present disclosure, Dv50 refers to a particle size corresponding to a point where a cumulative volume distribution percentage reaches 50%, measured by a laser particle size analyzer (for example, MalverR Master Size 3000) with reference to standard GB/T 19077-2016.

According to an embodiment of the present disclosure, an equivalent number $R_{(101)}$ of (101) crystallographic planes of the cathode active material precursor and an equivalent number $R_{(001)}$ of (001) crystallographic planes of the cathode active material precursor satisfy that $R_{(101)}/R_{(001)}$ ranges from 2.0 to 3.0, e.g., 2, 2.1, 2.2, 2.3, 2.4, 2.5, 2.6, 2.7, 2.8, 2.9, 3, etc. Thus, when the equivalent number $R_{(101)}$ of the (101) crystallographic planes of the cathode active material precursor and the equivalent number $R_{(001)}$ of the (001) crystallographic planes of the cathode active material precursor satisfy the above range, the precursor readily achieves high crystallinity, exhibits a more regular radiating arrangement, and is likely to be lithiated and reorganized during subsequent high-temperature sintering to form the cathode active material with a suitable number of the crystallographic planes and a structurally regular arrangement.

It should be noted that testing of the equivalent number $R_{(101)}$ of the (101) crystallographic planes of the cathode active material precursor and the equivalent number $R_{(001)}$ of the (001) crystallographic planes of the cathode active material precursor is similar to testing of the above $R_{(003)}$ and $R_{(104)}$ of cathode active material. For example,

$$R_{(101)} = \frac{A_{(101)}}{B_{(101)}} \text{, and } R_{(001)} = \frac{A_{(001)}}{B_{(001)}} \text{,}$$ where $A_{(101)}$ represents an average thickness of crystallites in the cathode active material precursor in a direction perpendicular to the (101) crystallographic planes, in the unit of nm, $B_{(101)}$ represents an interplanar spacing of the (101) crystallographic planes in the crystallites of the cathode active material precursor, in the unit of nm, $A_{(001)}$ represents an average thickness of the crystallites in the cathode active material precursor in a direction perpendicular to the (001) crystallographic planes, in the unit of nm, and $B_{(001)}$ represents an interplanar spacing of the (001) crystallographic planes in the crystallites of the cathode active material precursor, in the unit of nm.

As an example, $A_{(101)} = \frac{K\lambda}{\beta 3 \cos\theta 3}$, where K represents a Scherrer constant 0.89, $\lambda$ represents a wavelength of a test X-ray, $\beta 3$ represents a full width at half maximum of a diffraction peak of the (101) crystallographic planes in the crystallites of the cathode active material precursor, and 03 represents a Bragg diffraction angle of the (101) crystallographic planes in the crystallites in the cathode active material precursor.

$B_{(101)} = \frac{\lambda}{2\sin\theta 3}$ $A_{(001)} = \frac{K\lambda}{\beta 4 \cos\theta 4}$, where K represents a Scherrer constant 0.89, $\lambda$ represents a wavelength of a test X-ray, $\beta 4$ represents a full width at half maximum of a diffraction peak of the (001) crystallographic planes in the crystallites in the cathode active material, and 04 represents a Bragg diffraction angle of the (104) crystallographic planes in the crystallites in the cathode active material. $B_{(001)} = \frac{\lambda}{2\sin\theta 4}$.

According to an embodiment of the present disclosure, a peak intensity ratio $I_{(101)}/I_{(001)}$ of the cathode active material precursor ranges from 0.7 to 1.4, e.g., 0.7, 0.8, 1, 1.2, 1.4, etc. Further, the peak intensity ratio $I_{(101)}/I_{(001)}$ of the cathode active material precursor ranges from 0.8 to 1.2. Thus, the peak intensity ratio of the cathode active material precursor falling within the above range enables the precursor itself to have high crystallinity, improving the stability of the cathode active material.

In the present disclosure, the peak intensity $I_{(101)}$ of the cathode active material precursor refers to a peak intensity of a characteristic peak of the (101) crystallographic planes in its XRD pattern, and the $I_{(001)}$ refers to a peak intensity of a characteristic peak of the (001) crystallographic planes in its XRD pattern.

In S200, first mixing sintering is performed on the cathode active material precursor, a lithium source, and a dopant containing the element M.

According to an embodiment of the present disclosure, the cathode active material precursor obtained in the above step is subjected to the first mixing sintering with the lithium source and the dopant containing the element M in an oxygen-containing atmosphere. The first mixing sintering is performed at a temperature ranging from 650°C to 900°C, e.g., 650°C, 680°C, 700°C, 720°C, 750°C, 780°C, 800°C, 820°C, 850°C, 880°C, and 900°C, for a duration ranging from 4 hours to 15 hours, e.g., 4 h, 6 h, 8 h, 10 h, 12 h, 15 h, etc. Then, the mixture is naturally cooled to reduce a temperature of the sintered compound to a room temperature. After crushing, sieving, and iron removal, a first sintered cathode active material is obtained. Thus, by selecting the specific doping element M, growth of crystallites in the cathode active material during a lithiation stage can be controlled. Further, with the above sintering conditions, control over the equivalent number of the crystallographic planes of the cathode active material and the interplanar spacing can be achieved.

As an example, the above nickel salt, cobalt salt, manganese salt may be a chloride salt, a carbonate salt, and a sulfate salt corresponding to individual elements, and the lithium source and the dopant containing the element M may be at least one of the corresponding chloride salt, carbonate salt, sulfate salt, or an oxide.

Thus, the above cathode active material can be prepared using the above method, enhancing the cycling performance of the battery.

According to an embodiment of the present disclosure, the above method for preparing the cathode active material further includes the following steps.

In S300, second mixing sintering is performed on the first sintered cathode active material obtained in the step S200 and a coating agent containing element J, to form a coating layer containing the element J on at least part of a surface of the first sintered cathode active material. The second mixing sintering is performed at a temperature ranging from 200°C to 700°C, e.g., 200°C, 300°C, 400°C, 500°C, 600°C, 700°C, etc., for a duration ranging from 3 hours to 10 hours, e.g., 3 h, 4 h, 5 h, 6 h, 7 h, 8 h, 9 h, 10 h, etc. Then, after natural cooling, crushing, sieving, and iron removal, the cathode active material is obtained. Thus, by forming the coating layer containing the element J on an outer surface of the cathode active material, side reactions between the core of the cathode active material and the electrolyte can be reduced, improving the cycling stability of the cathode active material.

It should be noted that the features and advantages described above for the cathode active material are equally applicable to the method for preparing the cathode active material, and thus details thereof will be omitted here.

In a third aspect of the present disclosure, the present disclosure provides a cathode plate. According to an embodiment of the present disclosure, the cathode plate includes the cathode active material described in the first aspect of the present disclosure or the cathode active material obtained by the method described in the second aspect of the present disclosure.

According to an embodiment of the present disclosure, the cathode plate includes a cathode current collector and a cathode active material layer disposed on the cathode current collector. The cathode active material layer includes the above cathode active material. The cathode current collector may be a metallic foil or a composite current collector (the composite current collector may be formed by disposing a metallic material onto a polymer substrate). For example, the cathode current collector may be an aluminum foil.

According to some embodiments of the present disclosure, the cathode active material layer may optionally further include a binder. As an example, the binder may include at least one of polyvinylidene fluoride (PVBF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorine-containing acrylate resin.

According to some embodiments of the present disclosure, the cathode active material layer may optionally further include a conductive agent. As an example, the conductive agent may include at least one of superconducting carbon, acetylene black, carbon black, Ketjen black, a carbon dot, a carbon nanotube, graphene, or a carbon nanofiber.

According to some embodiments of the present disclosure, the cathode plate may be prepared by the following method: dispersing the above components used for preparing the cathode plate, such as the cathode active material, the conductive agent, the binder, and any other components, in a solvent (e.g., N-methylpyrrolidone) to form a cathode slurry; and coating the cathode slurry onto the cathode current collector, and performing processings such as drying and cold pressing to obtain the cathode plate.

It should be noted that the features and advantages described above for the cathode active material and the method for preparing the same are equally applicable to the cathode plate, and thus details thereof will be omitted here.

In a fourth aspect of the present disclosure, the present disclosure provides a battery. According to an embodiment of the present disclosure, the battery includes the above cathode plate.

As an example, the battery includes a cathode plate, an anode plate, an electrolyte, and a separator. The separator is located between the cathode plate and the anode plate. In the charge-discharge process of the battery, active ions shuttle between the cathode plate and the anode plate by intercalating into and deintercalating from the cathode plate and the anode plate. The electrolyte functions to conduct ions between the cathode plate and the anode plate. The separator is placed between the cathode plate and the anode plate, primarily serving to avoid short circuits between the cathode and the anode while allowing the ions to pass through.

According to an embodiment of the present disclosure, the anode plate includes an anode current collector and an anode active material layer disposed on the anode current collector. The anode active material layer includes an anode active material. The anode current collector may be a metallic foil or a composite current collector (the composite current collector may be formed by depositing a metallic material onto a polymer substrate). For example, the cathode current collector may be a copper foil.

According to some embodiments of the present disclosure, the anode active material may include at least one of artificial graphite, natural graphite, soft carbon, hard carbon, a silicon-based material, a tin-based material, or lithium titanate.

According to some embodiments of the present disclosure, the anode active material layer may optionally further include a conductive agent. The conductive agent may include at least one of superconducting carbon, acetylene black, carbon black, Ketjen black, a carbon dot, a carbon nanotube, graphene, and a carbon nanofiber.

According to some embodiments of the present disclosure, the anode active material layer may optionally further include additional additive, such as a thickener (e.g., sodium carboxymethyl cellulose (CMC-Na)).

According to some embodiments of the present disclosure, the anode plate may be prepared by the following method: dispersing the above components used for preparing the anode plate, such as the anode active material, the conductive agent, and the binder, in a solvent (e.g., deionized water) to form an anode slurry; and coating the anode slurry onto the anode current collector, and performing processings such as drying and cold pressing to obtain the anode plate.

According to some other embodiments of the present disclosure, the anode plate may include a lithium metallic sheet or a lithium alloy, such as a lithium-indium alloy.

According to some other embodiments of the present disclosure, a type of the separator is not particularly limited. Any known porous separator having satisfactory chemical stability and mechanical stability may be selected. For example, a material of the separator may include at least one of a glass fiber, non-woven fabric, polyethylene, polypropylene, or polyvinylidene fluoride. The separator may be a single-layer film or a multi-layer composite film, without particular limitation. When the separator is a multi-layer composite film, individual layers of the separator may be made of the same material or different materials, without particular limitation.

According to some other embodiments of the present disclosure, a type of the electrolyte is not specifically limited and can be selected as desired. For example, the electrolyte may be in a liquid state, a gel state, or a fully-solid state. According to some specific embodiments of the present disclosure, the electrolyte is an electrolyte solution, which includes a lithium salt and a solvent.

According to some specific embodiments of the present disclosure, the lithium salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, or lithium tetrafluoro(oxalato)phosphate.

According to some specific embodiments of the present disclosure, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethylene glycol dimethyl ether, methyl ethyl sulfone, or diethyl sulfone.

In some embodiments of the present disclosure, the electrolyte may optionally further include an additive. For example, the additive may include an anode film-forming additive and a cathode film-forming additive, and may further include an additive capable of improving predetermined performance of the battery, such as an additive for improving overcharge performance of the battery or an additive for improving high-temperature or low-temperature performance of the battery.

It should be noted that the features and advantages described above for the cathode plate are equally applicable to the solid-state battery, and thus details thereof will be omitted here.

In a fifth aspect of the present disclosure, the present disclosure provides an electric device. According to an embodiment of the present disclosure, the electric device includes the above battery. According to an embodiment of the present disclosure, the electric device may include, but is not limited to, a mobile phone, a laptop computer, an electric vehicle, and the like.

It should be noted that the features and advantages described above for the battery are equally applicable to the electric device, and thus details thereof will be omitted here.

Examples of the present disclosure are described below. The examples described below are illustrative, which are only used for illustrating the present disclosure and should not be construed as limiting the present disclosure. Where specific techniques or conditions are not indicated in the examples, the procedures shall be carried out in accordance with the techniques or conditions described in the literature in the field or in accordance with the product specification. The reagents or instruments used without the indication of the manufacturers are all conventional products that can be purchased commercially.

**Example 1**

(1) Nickel sulfate, cobalt sulfate, and manganese sulfate were dissolved in pure water based on a molar ratio of element nickel, element cobalt, and element manganese of 84:10:6 to obtain a mixed salt solution having a concentration of 2 mol/L. A sodium hydroxide solution having a concentration of 8 mol/L was prepared as a precipitant solution. Aqueous ammonia having a concentration of 6 mol/L was prepared as a complexing agent solution. A nitrogen gas was introduced into a reaction kettle for protection. A temperature of the reaction system was controlled at 60°C. The mixed salt solution, the sodium hydroxide solution, and the aqueous ammonia were separately fed into the reaction kettle through liquid inlet pipelines, with a stirring speed maintained at 500 rpm. A feed rate of the mixed salt solution was controlled at 500 mL/h. An ammonia content in the co-precipitation reaction system was controlled at 4.5 g/L. After aging for 1 hour, separation, washing, and drying were performed to obtain the cathode active material precursor.

(2) The above precursor, lithium hydroxide, a tin oxide, and ammonium dihydrogen phosphate were separately weighed based on a molar ratio of a sum of the elements nickel, cobalt, and manganese in the precursor, element lithium, element tin, and element phosphorus of 1:1.03:0.004:0.003, and then mixed uniformly in a mixer. The mixture was sintered at a constant temperature in an oxygen furnace. An oxygen concentration in an oxygen-containing gas in the oxygen furnace exceeded 95 vol%. A heating rate was 5°C/min. A sintering temperature was 810°C. A sintering duration was 10 hours. After the mixture was naturally cooled to a room temperature, crushing, sieving, and iron removal were performed to obtain the first sintered cathode active material.

(3) The first sintered cathode active material and boric acid were placed into a high-speed mixer based on a molar ratio of a sum of metallic transition elements in the first sintered cathode active material to element boron of 1:0.001, and mixed uniformly. The mixture was sintered at a constant temperature of 350°C in the oxygen furnace. The oxygen concentration in the oxygen-containing gas in the oxygen furnace exceeded 90 vol%. A sintering duration was 10 hours. After cooling, sieving, and iron removal, the cathode active material $Li_{1.03}Ni_{0.813}Co_{0.100}Mn_{0.060}Nb_{0.004}P_{0.003}O_2@B$ was obtained. In the chemical formula of the cathode active material, a part before @ represents a matrix component, and a part after @ represents a main element in the coating layer.

**Example 2 to Example 8 and Comparative Example 1 to Comparative Example 4**

The cathode active material was prepared based on the method of Example 1, with differences in material compositions and specific process conditions shown in Table 1.

In Example 2, the dopants were tungsten trioxide and ammonium dihydrogen phosphate, and the coating agent was boric acid.

In Example 3, the dopants were vanadium trioxide and ammonium dihydrogen phosphate, and the coating agent was boric acid.

In Example 4, the dopants were molybdenum oxide and boric acid, and the coating agent was tungsten trioxide.

In Example 5, the dopants were tin oxide and boric acid, and the coating agent was tungsten trioxide.

In Example 6, the dopant was boric acid, and the coating agent was boric acid.

In Example 7, the dopants were niobium pentoxide and boric acid, and the coating agent was boric acid.

In Example 8, the dopants were tin oxide and ammonium dihydrogen phosphate, and no coating agent was used.

In Comparative Example 1, the dopant was aluminum oxide, and the coating agent was boric acid.

In Comparative Example 2, the dopants were boric acid and ammonium dihydrogen phosphate, and no coating agent was used.

In Comparative Example 3, the dopants were niobium pentoxide and ammonium dihydrogen phosphate, and the coating agent was boric acid.

In Comparative Example 4, the dopants were niobium pentoxide and ammonium dihydrogen phosphate, and the coating agent was boric acid.

Table 1

| | Step i) Precursor Co-precipitation | | | Step ii) Doping and Sintering | | | | Step iii) Coating and Sintering | | | |
|---|---|---|---|---|---|---|---|---|---|---|---|
| | Molar ratio of nickel salt, cobalt salt, and manganese salt based on element Ni, element Co, and element Mn | Co-precipitation reaction temperature (precipitation | Ammonia content (g/L) | Doping element M | Molar ratio of precursor, lithium source, and dopant based on elements (Ni+Co+Mn), element lithium, and element M | Sintering temperature (°C) | Sintering duration (h) | Coating element J | Molar ratio of a sum of metallic transition elements in the first sintered material to element J | Sintering temperature (°C) | Sintering duration (h) |
| Example 1 | 84:10:6 | 60 | 4.5 | Sn and P | 1:1.03: 0.004:0.003 | 810 | 10 | B | 1:0.001 | 350 | 10 |
| Example 2 | 80:12:8 | 60 | 4.5 | W and P | 1: 1.03: 0.004:0.003 | 830 | 10 | B | 1:0.001 | 350 | 10 |
| Example 3 | 88:06:6 | 60 | 4.5 | V and P | 1: 1.03: 0.004:0.003 | 800 | 10 | B | 1:0.001 | 350 | 10 |
| Example 4 | 90:5:5 | 65 | 4.5 | Mo and B | 1: 1.03: 0.004:0.003 | 770 | 10 | W | 1:0.001 | 420 | 10 |
| Example 5 | 95:3:2 | 65 | 4.5 | Sn and B | 1:1.03: 0.004:0.003 | 750 | 10 | W | 1:0.001 | 420 | 10 |
| Example 6 | 84:10:6 | 60 | 4.5 | B | 1:1.03: 0.003 | 810 | 10 | B | 1:0.001 | 350 | 10 |
| Example 7 | 84:10:6 | 60 | 4.5 | Nb and B | 1:1.03: 0.004:0.003 | 810 | 10 | B | 1:0.001 | 350 | 10 |
| Example 8 | 84:10:6 | 60 | 4.5 | Sn and P | 1:1.03: 0.004:0.003 | 810 | 10 | / | / | / | / |
| Comparative Example 1 | 84:10:6 | 60 | 4.5 | Al | 1:1.03:0.007 | 810 | 10 | B | 1:0.001 | 350 | 10 |
| Comparative Example 2 | 84:10:6 | 60 | 4.5 | B and P | 1:1.03: 0.007:0.007 | 810 | 10 | / | / | / | / |
| Comparative Example 3 | 84:10:6 | 85 | 4.5 | Nb and P | 1: 1.03: 0.004:0.003 | 810 | 10 | B | 1: 0.001 | 350 | 10 |
| Comparative Example 4 | 84:10:6 | 60 | 1.5 | Nb and P | 1:1.03: 0.004:0.003 | 810 | 10 | B | 1:0.001 | 350 | 10 |

EP 4 723 234 A1

Note: In Table 1, for Example 1, when the doping elements include Sn and P, the molar ratio of the precursor, the lithium source, and the dopant based on the elements (Ni+Co+Mn), the element lithium, and the element M should be understood as the molar ratio of the precursor, the lithium source, and the dopant based on the elements (Ni+Co+Mn), the element lithium, the element Sn, and the element P. Similar interpretations apply to other Examples and Comparative Examples.

$R_{(101)}/R_{(001)}$ and $I_{(101)}/I_{(001)}$ of the precursors obtained in Example 2 to Example 8 and Comparative Example 1 to Comparative Example 4 and a composition of the cathode active material are shown in Table 2.

Table 2

| | Precursor | | | | | Cathode active material | | | |
|---|---|---|---|---|---|---|---|---|---|
| | $R_{(101)}$ | $R_{(001)}$ | $R_{(101)}/R_{(001)}$ | $I_{(101)}/I_{(001)}$ | Matrix | Main element in the coating layer | Specific surface area of the cathode active material ($m^2/g$) | Aspect ratio | Cross-sectional porosity (%) |
| Example 1 | 89 | 37 | 2.4 | 0.97 | $Li_{1.03}Ni_{0.833}Co_{0.1}Mn_{0.06}Sn_{0.004}P_{0.003}O_2$ | B | 0.68 | 2.7:1 | 6.3 |
| Example 2 | 75 | 33 | 2.3 | 1.02 | $Li_{1.03}Ni_{0.793}Co_{0.12}Mn_{0.08}W_{0.004}P_{0.003}O_2$ | B | 0.65 | 3.4:1 | 4.6 |
| Example 3 | 93 | 39 | 2.4 | 1.01 | $Li_{1.03}Ni_{0.873}Co_{0.06}Mn_{0.06}V_{0.004}P_{0.003}O_2$ | B | 0.61 | 3.0:1 | 6.7 |
| Example 4 | 105 | 42 | 2.5 | 0.93 | $Li_{1.03}Ni_{0.893}Co_{0.05}Mn_{0.05}Mn_{0.004}B_{0.003}O_2$ | W | 0.73 | 3.5:1 | 7.0 |
| Example 5 | 113 | 49 | 2.3 | 1.03 | $Li_{1.03}Ni_{0.943}Co_{0.03}Mn_{0.02}Sn_{0.004}B_{0.003}O_2$ | W | 0.72 | 4.0:1 | 7.1 |
| Example 6 | 89 | 37 | 2.4 | 0.8 | $Li1.03Ni0.838Co0.1Mn0.06B0.003O2$ | B | 0.65 | 3.7:1 | 5.8 |
| Example 7 | 89 | 37 | 2.4 | 0.97 | $Li_{1.03}Ni_{0.833}Co_{0.1}Mn_{0.06}Nb_{0.004}B_{0.003}O_2$ | B | 0.67 | 2.5:1 | 5.8 |
| Example 8 | 89 | 37 | 2.4 | 0.97 | $Li_{1.03}Ni_{0.833}Co_{0.1}Mn_{0.06}Sn_{0.004}P_{0.003}O_2$ | / | 0.79 | 2.7:1 | 6.5 |
| Comparative Example 1 | 89 | 37 | 2.4 | 0.97 | $Li_{1.03}Ni_{0.833}Co_{0.1}Mn_{0.06}Al_{0.007}O_2$ | B | 0.51 | 1.6:1 | 1.9 |
| Comparative Example 2 | 89 | 37 | 2.4 | 0.97 | $Li_{1.03}Ni_{0.826}Co_{0.1}Mn_{0.06}B_{0.007}P_{0.007}O_2$ | / | 0.95 | 5.1:1 | 9.0 |

EP 4 723 234 A1

14

| | Precursor | | | | Cathode active material | | | | |
|---|---|---|---|---|---|---|---|---|---|
| | $R_{(101)}$ | $R_{(001)}$ | $R_{(101)}/R_{(001)}$ | $I_{(101)}/I_{(001)}$ | Matrix | Main element in the coating layer | Specific surface area of the cathode active material (m$^2$/g) | Aspect ratio | Cross-sectional porosity (%) |
| Comparative Example 3 | 136 | 42 | 3.2 | 1.48 | $Li_{1.03}Ni_{0.833}Co_{0.1}Mn_{0.06}Nb_{0.004}P_{0.003}O_2$ | B | 0.91 | 4.3:1 | 8.6 |
| Comparative Example 4 | 54 | 31 | 1.7 | 0.64 | $Li_{1.03}Ni_{0.833}Co_{0.1}Mn_{0.06}Nb_{0.004}P_{0.003}O_2$ | B | 0.5 | 1.5:1 | 1.6 |

Table 3 reveals the average thickness $A_{(003)}$ of the crystallites in the cathode active material in the direction perpendicular to the (003) crystallographic planes, the interplanar spacing $B_{(003)}$ of the (003) crystallographic planes in the crystallites of the cathode active material, the average thickness $A_{(104)}$ of the crystallites in the cathode active material in the direction perpendicular to the (104) crystallographic planes, the interplanar spacing $B_{(104)}$ of the (104) crystallographic planes in the crystallites of the cathode active material, the equivalent number $R_{(003)}$ of the (003) crystallographic planes of the cathode active material, the equivalent number $R_{(104)}$ of the (104) crystallographic planes of the cathode active material, and $R_{(104)}/R_{(003)}$ that are obtained from Example 2 to Example 8 and Comparative Example 1 to Comparative Example 4.

Table 3

|  | $A_{(003)}$ (nm) | $B_{(003)}$ (nm) | $R_{(003)}$ | $A_{(104)}$ (nm) | $B_{(104)}$ (nm) | $R_{(104)}$ | $R_{(104)}/R_{(003)}$ |
|---|---|---|---|---|---|---|---|
| Example 1 | 55.3 | 0.4738 | 117 | 39.32 | 0.204 | 193 | 1.65 |
| Example 2 | 51.11 | 0.4739 | 108 | 35.26 | 0.204 | 173 | 1.60 |
| Example 3 | 50.64 | 0.4737 | 107 | 35.96 | 0.2039 | 176 | 1.65 |
| Example 4 | 51.43 | 0.4736 | 109 | 34.72 | 0.2038 | 170 | 1.57 |
| Example 5 | 49.98 | 0.4735 | 106 | 33.84 | 0.2037 | 166 | 1.57 |
| Example 6 | 60.69 | 0.4737 | 128 | 44.25 | 0.2038 | 217 | 1.69 |
| Example 7 | 58.3 | 0.4739 | 123 | 38.24 | 0.2039 | 188 | 1.52 |
| Example 8 | 54.8 | 0.4739 | 116 | 40.99 | 0.2039 | 201 | 1.74 |
| Comparative Example 1 | 49.2 | 0.474 | 104 | 28.9 | 0.204 | 142 | 1.36 |
| Comparative Example 2 | 58.3 | 0.4737 | 123 | 46.2 | 0.204 | 226 | 1.84 |
| Comparative Example 3 | 66.1 | 0.4738 | 140 | 51.9 | 0.2039 | 254 | 1.82 |
| Comparative Example 4 | 37.7 | 0.4738 | 79 | 21.7 | 0.204 | 106 | 1.34 |

The cathode active materials obtained in Example 1 to Example 8 and Comparative Example 1 to Comparative Example 4 were assembled into 2025-type coin batteries. A first-cycle coulombic efficiency, cycling performance, rate capability, and a lithium-ion diffusion coefficient of the battery were characterized. The characterization results are shown in Table 4.

A preparation process of the 2025-type coin battery is specifically as follows.

Preparation of cathode plate: the cathode active material, acetylene black, and polyvinylidene fluoride (PVDF) were mixed based on a mass ratio of 95:3:2 with an appropriate amount of N-methylpyrrolidone (NMP) to form a uniform slurry. The slurry was coated onto two sides of an aluminum foil. The coated aluminum foil was dried at 120°C for 12 h, and then stamped under a pressure of 100 MPa to form a cathode plate having a diameter of 12 mm and a thickness of 120 $\mu$m. A loading amount of the cathode active material on the aluminum foil ranged from 15 mg/cm$^2$ to 16 mg/cm$^2$.

Battery assembly: in an argon-filled glove box with a water content and an oxygen content both below 5 ppm, the cathode plate, the separator, the anode plate, and the electrolyte were assembled into the 2025-type coin battery, and then let stand for 6 h. The anode plate was a metallic lithium sheet having a diameter of 17 mm and a thickness of 1 mm. The separator was a porous polyethylene membrane (Celgard 2325) having a thickness of 25 $\mu$m. The electrolyte included the lithium salt LiPF$_6$ and a solvent (a volume ratio of ethylene carbonate (EC) to diethyl carbonate (DEC) of 1:1), with a concentration of LiPF$_6$ of 1 mol/L.

First-cycle coulombic efficiency test:

At 25°C, the battery was charged at a constant current of 0.1 C to 4.4 V, and then charged at a constant voltage until the current reached 0.02 C, to obtain a first-cycle charging specific capacity Co. Then, the battery was discharged at the constant current of 0.1 C to 3.0 V to obtain a first-cycle discharging specific capacity $C_1$. The first-cycle coulombic efficiency of the battery $= C_1/C_0 \times 100\%$.

A charge-discharge voltage was controlled to range from 3.0 V to 4.3 V. At the room temperature, the coin battery was subjected to a charge-discharge test at 0.1 C to evaluate electrochemical performance of the multi-element cathode material.

Cycling performance test: at 45°C, the battery was charged at the constant current of 1 C to 4.3 V to obtain the first charging specific capacity $C_2$, and then discharged at the constant current of 1 C to 3.0 V. Subsequently, the battery underwent 80 charge-discharge cycles at the constant current of 1 C. The discharging specific capacity at the 80-th cycle, $C_{80}$, was recorded. The first-cycle coulombic efficiency of the battery $= C_{80}/C_2 \times 100\%$.

Rate capability test: the charge-discharge voltage was controlled to range from 3.0 V to 4.3 V. At the room temperature, two charge-discharge cycles were performed on the coin battery at 0.1 C, and then one charge-discharge cycle was performed on the coin battery at each of 0.2 C, 0.33 C, 0.5 C, and 1 C. The rate capability of the battery was characterized by a ratio of the first discharging specific capacity at 0.1 C to the discharging specific capacity at 1 C. The first discharging specific capacity at 0.1 C refers to the discharging specific capacity of the coin battery in the first cycle. The discharging specific capacity at 1 C refers to the discharging specific capacity of the coin battery in the 6-th cycle.

Diffusion coefficient test: EIS was used for testing and analysis. The battery was charged at the constant current of 0.1 C to 4.3 V, charged at a constant voltage for 30 min, and then discharged at the constant current of 0.1 C to 3.0 V. Subsequently, the battery was charged again at the constant current of 0.1 C to 4.3 V. The fully charged half-battery was then subjected to EIS testing within a frequency ranging from (100) kHz to 0.01 Hz, with an amplitude of 10 mV. According to the following formulas, a slope $\sigma$ of the fitting line between $Z_{re}$ and $\omega^{-1/2}$ can be obtained:

$$Z_{re} = R_s + R_{ct} + \sigma\omega^{-1/2},$$

and

$$\omega = 2\pi f.$$

In the formulas, $Z_{re}$ represents a real part of a measured impedance spectrum, $R_s$ represents a solution resistance, $R_{ct}$ represents a charge transfer resistance, $\omega$ represents an angular frequency, f represents a test frequency, and $\sigma$ represents a Warburg factor.

Then, according to the calculation formula of the lithium-ion diffusion coefficient, the bulk $Li^+$ diffusion coefficient $D_{Li}^+$ of the material is obtained:

$$D_{Li}^+ = R^2T^2/(2A^2n^4F^4C^2\sigma^2).$$

In the formula, R represents an ideal gas constant, T represents an absolute temperature, A represents a cross-sectional area of an electrode, n represents a number of transferred electrons, F represents a Faraday constant, and C represents a lithium-ion concentration in the electrode.

Table 4

| | Charging specific capacity at 0.1 C (mAh/g) | Discharging specific capacity at 0.1 C (mAh/g) | First-cycle efficiency (%) | Rate capability (1 C/0.1 C) | Cycle retention rate (%) | Lithium-ion diffusion coefficient |
|---|---|---|---|---|---|---|
| Example 1 | 236.4 | 216.3 | 91.5 | 0.91 | 90.4 | $8.0\times10^{-11}$ |
| Example 2 | 232.1 | 211.7 | 91.2 | 0.91 | 90.6 | $8.1\times10^{-11}$ |
| Example 3 | 238.5 | 219.5 | 92.0 | 0.91 | 90.3 | $8.1\times10^{-11}$ |
| Example 4 | 243.3 | 229.4 | 94.3 | 0.9 | 90 | $8.2\times10^{-11}$ |
| Example 5 | 247.8 | 235.1 | 94.9 | 0.9 | 90 | $8.3\times10^{-11}$ |
| Example 6 | 236.8 | 214.7 | 90.7 | 0.88 | 91.7 | $7.9\times10^{-11}$ |
| Example 7 | 239.1 | 218.6 | 91.4 | 0.92 | 89.9 | $8.0\times10^{-11}$ |
| Example 8 | 240.7 | 221.9 | 92.2 | 0.89 | 88.3 | $8.4\times10^{-11}$ |
| Comparative Example 1 | 233.9 | 208.9 | 89.3 | 0.87 | 84.56 | $7.9\times10^{-11}$ |
| Comparative Example 2 | 234.5 | 211.3 | 90.1 | 0.85 | 86.33 | $7.9\times10^{-11}$ |
| Comparative Example 3 | 232.2 | 210.3 | 90.6 | 0.85 | 82.8 | $7.8\times10^{-11}$ |

(continued)

|  | Charging specific capacity at 0.1 C (mAh/g) | Discharging specific capacity at 0.1 C (mAh/g) | First-cycle efficiency (%) | Rate capability (1 C/0.1 C) | Cycle retention rate (%) | Lithium-ion diffusion coefficient |
|---|---|---|---|---|---|---|
| Comparative Example 4 | 234.3 | 210.6 | 89.9 | 0.84 | 82.33 | $7.6 \times 10^{-11}$ |

Table 3 reveals that, $R_{(104)}/R_{(003)}$ of the cathode active material in Example 1 to Example 8 ranges from 1.4 to 1.8, whereas $R_{(104)}/R_{(003)}$ of the cathode active material in Comparative Example 1 to Comparative Example 4 are all outside the range of 1.4 to 1.8. Table 4 reveals that, the first-cycle coulombic efficiency, the rate capability, and the capacity retention rate of the batteries in Example 1 to Example 8 are significantly higher than those of the batteries in Comparative Example 1 to Comparative Example 4. Meanwhile, the charging specific capacity, the discharging specific capacity, and the lithium-ion diffusion coefficient can also be maintained within suitable ranges. This indicates that using the cathode active material with $R_{(104)}/R_{(003)}$ ranging from 1.4 to 1.8 can achieve superior rate capability and cycling performance for the battery containing such cathode active material, without sacrificing the capacity, the first-cycle efficiency, or the lithium-ion diffusion coefficient.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

**Claims**

1. A cathode active material, wherein the cathode active material is secondary particles, wherein an equivalent number $R_{(003)}$ of (003) crystallographic planes of the cathode active material and an equivalent number $R_{(104)}$ of (104) crystallographic planes of the cathode active material satisfy:

   $R_{(104)}/R_{(003)}$ ranges from 1.4 to 1.8;

   $$R_{(003)} = \frac{A_{(003)}}{B_{(003)}} \; ;$$

   and

   $$R_{(104)} = \frac{A_{(104)}}{B_{(104)}} \, ,$$

   where:

   $A_{(003)}$ represents an average thickness of crystallites in the cathode active material in a direction perpendicular to the (003) crystallographic plane, in the unit of nm;
   $B_{(003)}$ represents an interplanar spacing of the (003) crystallographic planes in the crystallites of the cathode active material, in the unit of nm;
   $A_{(104)}$ represents an average thickness of the crystallites in the cathode active material in a direction perpendicular to the (104) crystallographic plane, in the unit of nm; and

18

$B_{(104)}$ represents an interplanar spacing of the (104) crystallographic planes in the crystallites of the cathode active material, in the unit of nm.

2. The cathode active material according to claim 1, wherein $R_{(104)}/R_{(003)}$ ranges from 1.55 to 1.75.

3. The cathode active material according to claim 1 or 2, wherein the equivalent number $R_{(003)}$ of the (003) crystallographic planes of the cathode active material ranges from 80 to 130.

4. The cathode active material according to any one of claims 1 to 3, wherein the equivalent number $R_{(003)}$ of the (003) crystallographic planes of the cathode active material ranges from 90 to 120.

5. The cathode active material according to any one of claims 1 to 4, wherein the equivalent number $R_{(104)}$ of the (104) crystallographic planes of the cathode active material ranges from 140 to 210.

6. The cathode active material according to any one of claims 1 to 5, wherein the equivalent number $R_{(104)}$ of the (104) crystallographic planes of the cathode active material ranges from 150 to 200.

7. The cathode active material according to any one of claims 1 to 6, wherein the average thickness $A_{(003)}$ of the crystallites in the cathode active material in the direction perpendicular to the (003) crystallographic plane ranges from 35 nm to 55 nm.

8. The cathode active material according to any one of claims 1 to 7, wherein the average thickness $A_{(003)}$ of the crystallites in the cathode active material in the direction perpendicular to the (003) crystallographic plane ranges from 40 nm to 55 nm.

9. The cathode active material according to any one of claims 1 to 8, wherein the interplanar spacing $B_{(003)}$ of the (003) crystallographic planes of the cathode active material ranges from 0.4730 nm to 0.4760 nm.

10. The cathode active material according to any one of claims 1 to 9, wherein the interplanar spacing $B_{(003)}$ of the (003) crystallographic planes of the cathode active material ranges from 0.4735 nm to 0.4750 nm.

11. The cathode active material according to any one of claims 1 to 10, wherein the average thickness $A_{(104)}$ of the crystallites in the cathode active material in the direction perpendicular to the (104) crystallographic plane ranges from 25 nm to 55 nm.

12. The cathode active material according to any one of claims 1 to 11, wherein the average thickness $A_{(104)}$ of the crystallites in the cathode active material in the direction perpendicular to the (104) crystallographic plane ranges from 30 nm to 50 nm.

13. The cathode active material according to any one of claims 1 to 12, wherein the interplanar spacing $B_{(104)}$ of the (104) crystallographic planes of the cathode active material ranges from 0.2030 nm to 0.2040 nm.

14. The cathode active material according to any one of claims 1 to 13, wherein the interplanar spacing $B_{(104)}$ of the (104) crystallographic planes of the cathode active material ranges from 0.2035 nm to 0.2040 nm.

15. The cathode active material according to any one of claims 1 to 14, wherein primary particles of the cathode active material have an aspect ratio ranging from (2 to 5):1.

16. The cathode active material according to any one of claims 1 to 15, wherein primary particles of the cathode active material have an aspect ratio ranging from (2 to 4):1.

17. The cathode active material according to any one of claims 1 to 16, wherein the cathode active material has a cross-sectional porosity ranging from 2% to 10%.

18. The cathode active material according to any one of claims 1 to 17, wherein the cathode active material has a cross-sectional porosity ranging from 3% to 8%.

19. The cathode active material according to any one of claims 1 to 18, wherein the cathode active material has a BET specific surface area ranging from 0.4 m$^2$/g to 0.9 m$^2$/g.

20. The cathode active material according to any one of claims 1 to 19, wherein the cathode active material has a BET specific surface area ranging from 0.5 m$^2$/g to 0.8 m$^2$/g.

21. The cathode active material according to any one of claims 1 to 20, comprising a matrix, wherein the matrix comprises $Li_{1+a}Ni_xCo_yMn_zM_mO_2$, where:

$$-0.05 \leq a \leq 0.3;$$

$$0.8 \leq x \leq 1;$$

$$0 \leq y \leq 0.2;$$

$$0 \leq z \leq 0.2;$$

$$0.002 \leq m \leq 0.01;$$

and
M comprises at least one of Sn, W, V, Mo, P, or B.

22. The cathode active material according to claim 21, wherein the M further comprises at least one of Sb, Nb, Mg, La, Ti, Al, Sr, Ba, Y, Zr, Ca, Fe, S, Zn, or Ta.

23. The cathode active material according to claim 21 or 22, further comprising a coating layer formed on at least part of a surface of the matrix, wherein the coating layer contains element J, the element J comprising at least one of Al, Zr, Ti, F, B, Cl, Br, I, S, W, Co, Sn, or Mo.

24. A method for preparing the cathode active material according to any one of claims 1 to 23, the method comprising:

preparing a cathode active material precursor; and
performing first mixing sintering on the cathode active material precursor, a lithium source, and a dopant containing the element M, to obtain a first sintered cathode active material.

25. The method according to claim 24, wherein said preparing the cathode active material precursor comprises:
mixing a nickel salt, a cobalt salt, a manganese salt, a precipitant, and a complexing agent for a co-precipitation reaction, to obtain the cathode active material precursor, wherein:

a temperature of the co-precipitation reaction ranges from 50°C to 80°C; and
an ammonia content during the co-precipitation reaction ranges from 2 g/L to 8 g/L.

26. The method according to claim 25, wherein:

the temperature of the co-precipitation reaction ranges from 55°C to 75°C; and
the ammonia content during the co-precipitation reaction ranges from 3 g/L to 7 g/L.

27. The method according to any one of claims 24 to 26, wherein the cathode active material precursor satisfies at least one of the following conditions:

the cathode active material precursor has Dv50 ranging from 9 μm to 20 μm;
an equivalent number $R_{(101)}$ of (101) crystallographic planes of the cathode active material precursor and an equivalent number $R_{(001)}$ of (001) crystallographic planes of the cathode active material precursor satisfy: $R_{(101)}/R_{(001)}$ ranging from 2.0 to 3.0; or
a peak intensity ratio $I_{(101)}/I_{(001)}$ of the cathode active material precursor ranges from 0.7 to 1.4.

28. The method according to claim 27, wherein the peak intensity ratio $I_{(101)}/I_{(001)}$ of the cathode active material precursor ranges from 0.8 to 1.2.

29. The method according to any one of claims 24 to 28, wherein the first mixing sintering is performed at a temperature ranging from 650°C to 900°C for a duration ranging from 4 hours to 15 hours.

30. The method according to any one of claims 24 to 29, further comprising:
performing second mixing sintering on the first sintered cathode active material and a coating agent containing element J, to form a coating layer containing the element J on at least part of a surface of the first sintered cathode active material.

31. The method according to claim 30, wherein the second mixing sintering is performed at a temperature ranging from 200°C to 700°C for a duration ranging from 3 hours to 10 hours.

32. A cathode plate, comprising:

   the cathode active material according to any one of claims 1 to 23; or
   the cathode active material obtained by the method according to any one of claims 24 to 31.

33. A battery, comprising the cathode plate according to claim 32.

34. An electric device, comprising the battery according to claim 33.

## INTERNATIONAL SEARCH REPORT

| International application No. |
|---|
| **PCT/CN2024/096116** |

**A.  CLASSIFICATION OF SUBJECT MATTER**

H01M4/525(2010.01)i;  H01M4/505(2010.01)i;  H01M4/485(2010.01)i;  H01M4/36(2006.01)i;  H01M4/131(2010.01)i;  H01M10/0525(2010.01)i

According to International Patent Classification (IPC) or to both national classification and IPC

**B.  FIELDS SEARCHED**

Minimum documentation searched (classification system followed by classification symbols)

IPC/CPC:H01M4/-,H01M10/-

Documentation searched other than minimum documentation to the extent that such documents are included in the fields searched

Electronic data base consulted during the international search (name of data base and, where practicable, search terms used)

CNTXT, ENTXTC, VEN, CJFD, ISI Web Of Science: 正极, 阴极, NCM, Ni s Co s Mn, 掺杂, 104, 003, 晶粒尺寸, 晶面间距, 半峰宽, FWHM, 谢乐, 衍射 5w 角, cathode, positive electrode, dop+, size, thickness, spacing, Scherrer, diffraction angle

**C.  DOCUMENTS CONSIDERED TO BE RELEVANT**

| Category* | Citation of document, with indication, where appropriate, of the relevant passages | Relevant to claim No. |
|---|---|---|
| X | CN 117810391 A (SHENZHEN BTR NANO TECHNOLOGY CO., LTD.) 02 April 2024 (2024-04-02) <br> description, paragraphs 54-123 and 162-172, and embodiment 3 | 1-14, 21-24, 29-34 |
| Y | CN 117810391 A (SHENZHEN BTR NANO TECHNOLOGY CO., LTD.) 02 April 2024 (2024-04-02) <br> description, paragraphs 54-123 and 162-172, and embodiment 3 | 15-20, 25-28 |
| Y | CN 117038979 A (BEIJING EASPRING MATERIAL TECHNOLOGY CO., LTD. et al.) 10 November 2023 (2023-11-10) <br> description, paragraphs 54, 55, 82, 83, 95-123, and 155-164 | 15-20, 25, 26 |
| Y | CN 117125747 A (NINGBO RONBAY NEW ENERGY TECHNOLOGY CO., LTD.) 28 November 2023 (2023-11-28) <br> description, paragraphs 40-47 | 27, 28 |
| X | CN 117712369 A (WANHUA CHEMICAL (YANTAI) BATTERY MATERIAL TECHNOLOGY CO., LTD. et al.) 15 March 2024 (2024-03-15) <br> description, paragraphs 5-98 | 1-14, 21-24, 29-34 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **23 December 2024** | **31 December 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**EP 4 723 234 A1**

**INTERNATIONAL SEARCH REPORT**

| International application No. |
|---|
| **PCT/CN2024/096116** |

| C. | DOCUMENTS CONSIDERED TO BE RELEVANT | |
|---|---|---|
| Category* | Citation of document, with indication, where appropriate, of the relevant passages | Relevant to claim No. |
| Y | CN 117712369 A (WANHUA CHEMICAL (YANTAI) BATTERY MATERIAL TECHNOLOGY CO., LTD. et al.) 15 March 2024 (2024-03-15)<br>  description, paragraphs 5-98 | 15-20, 25-28 |
| Y | CN 115832231 A (BEIJING EASPRING MATERIAL TECHNOLOGY CO., LTD.) 21 March 2023 (2023-03-21)<br>  paragraphs 26-80 | 15-20, 25, 26 |
| Y | CN 117613259 A (GUANGXI ZHONGWEI NEW ENERGY TECHNOLOGY CO., LTD. et al.) 27 February 2024 (2024-02-27)<br>  description, paragraphs 66-91 | 27, 28 |
| A | CN 107359334 A (GUIZHOU ZHENHUA NEW MATERIALS CO., LTD. et al.) 17 November 2017 (2017-11-17)<br>  entire description | 1-34 |
| A | CN 114759183 A (AESC TECHNOLOGY (JIANGSU) CO., LTD. et al.) 15 July 2022 (2022-07-15)<br>  entire description | 1-34 |
| A | WO 2023024581 A1 (BEIJING EASPRING MATERIAL TECHNOLOGY CO., LTD.) 02 March 2023 (2023-03-02)<br>  entire description | 1-34 |

Form PCT/ISA/210 (second sheet) (July 2022)

23

# INTERNATIONAL SEARCH REPORT
### Information on patent family members

International application No.

**PCT/CN2024/096116**

| Patent document cited in search report | | | Publication date (day/month/year) | Patent family member(s) | | | Publication date (day/month/year) |
|---|---|---|---|---|---|---|---|
| CN | 117810391 | A | 02 April 2024 | None | | | |
| CN | 117038979 | A | 10 November 2023 | None | | | |
| CN | 117125747 | A | 28 November 2023 | None | | | |
| CN | 117712369 | A | 15 March 2024 | None | | | |
| CN | 115832231 | A | 21 March 2023 | None | | | |
| CN | 117613259 | A | 27 February 2024 | None | | | |
| CN | 107359334 | A | 17 November 2017 | JP | 2019021626 | A | 07 February 2019 |
| | | | | KR | 20190006907 | A | 21 January 2019 |
| | | | | EP | 3444226 | A1 | 20 February 2019 |
| | | | | US | 2019020020 | A1 | 17 January 2019 |
| | | | | US | 10790506 | B2 | 29 September 2020 |
| CN | 114759183 | A | 15 July 2022 | None | | | |
| WO | 2023024581 | A1 | 02 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410544723